# EUROPEAN PATENT SPECIFICATION

(11) **EP 4 361 041 B1**
(45) Date of publication and mention of the grant of the patent: **04.03.2026**
(21) Application number: 22204140.2
(22) Date of filing: 27.10.2022
(51) Int. Cl.: B64D 11/04

(54) **AIRCRAFT HAVING A WATER SUPPLY SYSTEM WITH GREY WATER REUSE**
FLUGZEUG MIT EINEM WASSERVERSORGUNGSSYSTEM MIT GRAUWASSERWIEDERVERWENDUNG
AÉRONEF COMPORTANT UN SYSTÈME D'ALIMENTATION EN EAU À RÉUTILISATION D'EAUX GRISES

(43) Date of publication of application: 01.05.2024
(73) Proprietor: Airbus Operations GmbH, 21129 Hamburg (DE)
(72) Inventor: Philipp, Jan Boris, 21129 Hamburg (DE); Kessler, Rolf, 21129 Hamburg (DE); Schäfer, Philipp, 21129 Hamburg (DE); Engelhardt, Jörg, 21129 Hamburg (DE)
(74) Representative: Schornack, Oliver

(56) References cited:
- EP-A1- 2 484 574
- EP-A1- 2 937 480
- CN-A- 115 230 968
- US-A- 3 594 825

## Description

The present disclosure generally relates to water supply systems in an aircraft.

Specifically, the present disclosure relates to an aircraft comprising a potable water supply system for a monument in an aircraft capable of reusing water (grey water use).

Currently, potable water in an aircraft is provided to potable water consumers, such as a faucet, a toilet or a galley, in a pressurised water network, so that the potable water is under sufficient pressure at the respective consumer. For instance, the water at a faucet or toilet is provided under pressure by the pressurised water network.

In addition, grey water use in aircrafts is under development, i.e. reusing water where possible. Since water from certain consumers, such as a sink, does not contain any waste, it can easily be reused. As an example, water from a sink in a galley or a lavatory/washroom where people can wash their hands or brush their teeth, etc., can be used to flush a toilet.

Document EP2484574A1 discloses a sanitary facility of a railway carriage, comprising a fresh water tank, an intermediate fresh water tank, a grey water tank and two consumers. Document CN115230968A discloses a water supply system for an aircraft, having a plurality of consumers with buffers, which are connected to a water tank via lines and a pressure source.

However, reuse of water (i.e., use of grey water) requires separate water pipes or ducts and conveying devices for potable water on the one hand and grey water on the other hand. This increases the overall weight of the water system.

It is therefore an object of the present disclosure to provide a water supply system including grey water use that is less complex and lightweight.

This object is solved by the present invention as defined in the independent claim.

Preferred embodiments are defined by the dependent claims.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof, the invention being defined exclusively by the claims.

In the following, the present disclosure will further be described with reference to exemplary implementations illustrated in the figures, in which:
- Figure 1: schematically illustrates a potable water supply system having a grey water reuse system;
- Figure 2: schematically illustrates a controlling circuit for and further details of a potable water supply system;
- Figure 3: schematically illustrates a variant of a potable water supply system with grey water reuse;
- Figure 4: schematically illustrates a further variant of a potable water supply system with grey water reuse; and
- Figure 5: schematically illustrates an aircraft.

In the following description, for purposes of explanation and not limitation, specific details are set forth in order to provide a thorough understanding of the present disclosure. It will be apparent to one skilled in the art that the present disclosure may be practiced in other implementations that depart from these specific details.

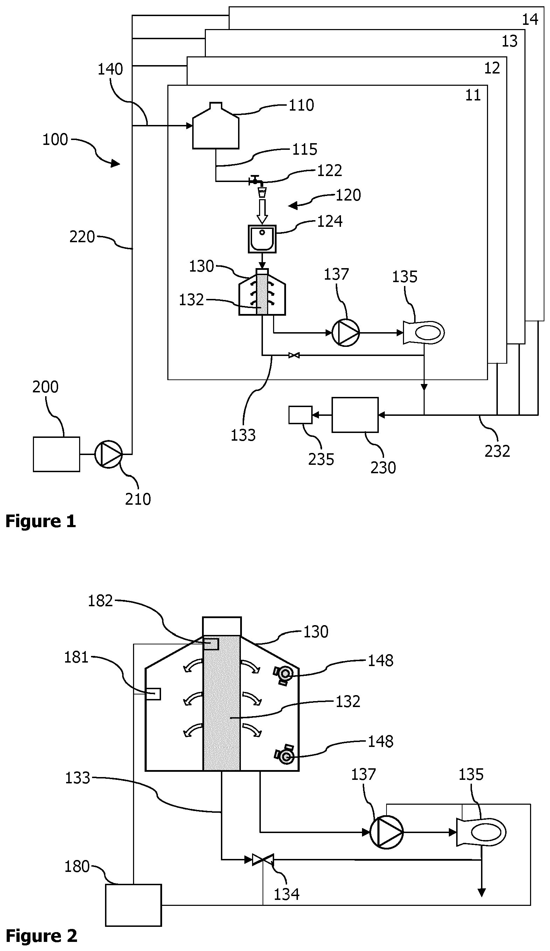

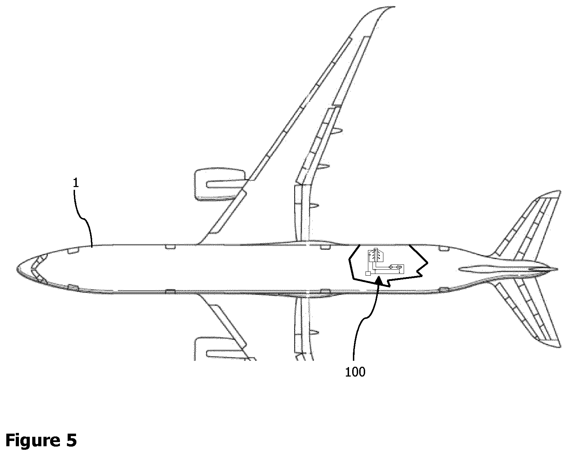

Figure 1 schematically illustrates a potable water supply system 100 in an aircraft 1 (Figure 5). The potable water supply system 100 is illustrated as being installed in a monument 11, such as a lavatory 11, 12, 13 or a galley 14. The following description is directed to a potable water supply system 100 installed in a lavatory 11. Figure 1 further illustrates additional lavatories or washrooms 12, 13, which may be equipped with a water supply system 100 in the same manner as illustrated and described with respect to lavatory 11.

The potable water supply system 100 comprises a pressureless water buffer tank 110 that holds a small amount of water sufficient for use at a potable water consumer 120 of the system 100. The potable water consumer 120 is connected to the pressureless water buffer tank 110 via a water supply pipe 115. Figure 1 illustrates the potable water consumer 120 schematically as a faucet 122 and a sink 124, which can collect water used from the faucet 122. It is to be understood that any other potable water consumer 120 may be employed.

The pressureless water buffer tank 110 is arranged at an upper region of the monument 11, such as an upper region of a wall or ceiling of the monument 11. In other words, the pressureless water buffer tank 110 is installed in the monument 11 above the potable water consumer 120. This allows to guide water from the pressureless water buffer tank 110 through the water supply pipe 115 to the potable water consumer 120 only by gravity. The pressure required at the potable water consumer 120, such as the faucet 122, can be achieved by a height difference between the pressureless water buffer tank 110 and the faucet 122.

The water collected by the sink 124 from the potable water consumer 120 is collected by a grey water unit 130, which stores the collected grey water. The grey water unit 130 may be a simple tank fluidly connected to an outlet of the potable water consumer 120, such as a siphon of the sink 124.

In order to prevent any non-liquid particles from reaching the grey water portion of the system 100, a filter 132 can be provided. For example, the filter 132 may be installed inside of the grey water unit 130 and is configured to filter the grey water before storing the grey water.

The system 100 further comprises a pressurisation unit 137 fluidly connected to the grey water unit 130 and configured to pressurise grey water from the grey water unit 130 and to provide pressurised grey water. For instance, the pressurisation unit 137 can be a conveying device for water, a compressor, a pump or the like.

In addition, the system 100 comprises a toilet 135, which is supplied with grey water from the pressurisation unit 137. It is to be understood that any water consuming device can be employed for reusing water, i.e., using grey water. The most common grey water using device, however, is a toilet 135, which is described here. The toilet 135 is best flushed with pressurised water, while grey water may easily be used for this purpose. Thus, less potable water has to be carried by the aircraft 1, if grey water is stored (buffered) in the grey water unit 130 and used to flush the toilet 135.

The toilet 135 is connected to a waste water tank 230, which collects waste in the aircraft 1. For instance, a (toilet) waste collecting network 232 consisting of associated pipes can collect used water in the aircraft 1. For instance, the waste collecting network 232 can comprise waste water pipes from each of the monuments 11, 12, 13, 14 to the waste water tank 230. As a mere example, a vacuum generator 235 may be employed to apply a vacuum in the waste collecting network 232, hence, forming a vacuum waste water system.

In order to allow drainage of the grey water unit 130, a drainage pipe 133 can be fluidly connected to the grey water unit 130 and the (toilet) waste collecting network 232. For example, when the aircraft 1 is not in use the water systems 100, 232 of the aircraft 1 may have to be drained, for instance, to avoid damage due to freezing water.

The potable water can be provided to the system 100 from a potable water tank 200.

The aircraft 1 can be equipped with a single potable water tank 200 or a few potable water tanks 200, depending on the amount of water required in the aircraft 1 and/or the distance between the potable water tank 200 and the furthest water supply system 100.

A conveying device 210, such as a pump, compressor or the like, conveys potable water from tank 200 into a potable water network 220, wherein the potable water in the network 220 is under pressure. The pressurisation of the potable water is necessary to conduct the potable water through the network 220 of pipes, which is a conventional measure. According to the invention, the network 220 is configured to conduct pressurised potable water to a plurality of monuments 11, 12, 13, 14, which have a potable water consumer 120.

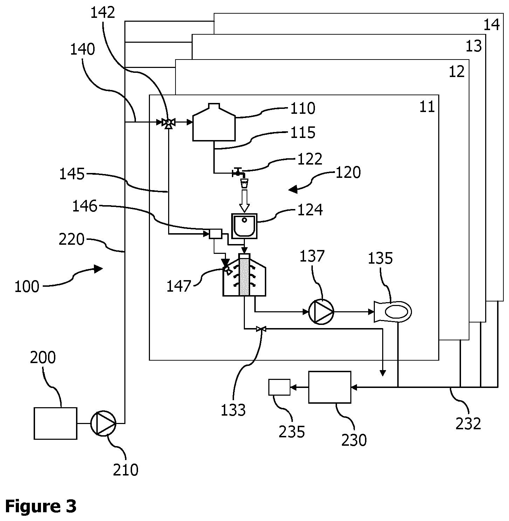

The water supply system 100 can comprise a pressurised water supply 140 configured to provide pressurised potable water at least to the pressureless water buffer tank 110. As a mere example, the pressurised water supply 140 can be a pipe or duct 140 connected to the pressurised potable water network 220 and/or a valve 142 (Figure 3) installed in the pressurised potable water network 220 and controllable to be opened and closed. A further pipe (only illustrated in Figure 3) can fluidly connect the valve 142 and the pressureless water buffer tank 110. Alternatively, the valve 142 is installed at, on or in the pressureless water buffer tank 110.

The pressurised water supply 140 can be configured to automatically fill the pressureless water buffer tank 110 to a predefined water level. As a mere example, a conventional water level sensor (not illustrated) can be installed in the pressureless water buffer tank 110. This allows filling the pressureless water buffer tank 110 by controlling the controllable valve 142 in dependence of a signal from the water level sensor.

Figure 2 schematically illustrates a controlling circuit for a potable water supply system 100 having a grey water reuse system. This controlling circuit includes a controller 180 that is configured to collect sensor values or other signals and to control certain components of the water supply system 100. For instance, the controller 180 can control valve 142 (Figure 3).

The grey water unit 130 may comprise water level sensors 181, 182, wherein one sensor 181 can be configured to measure a water level in the tank of the grey water unit 130. This allows the controller 180 to determine whether enough grey water has been collected, in order to allow at least one flush of the toilet 135.

Furthermore, another water sensor 182 can be configured to indicate a maximum fill level in the tank of the grey water unit 130. For instance, if more potable water is used at the potable water consumer 120 than grey water usage, for example, at the toilet 135, the controller 180 may be configured to open a drain valve 134 in the drainage pipe 133 (Figure 1). This allows draining water from the grey water unit 130, for example, into the waste collecting network 232. The drain valve 134 can be designed in the same manner as a conventional atmospheric vacuum breaker that hinders any fluid from the waste collecting network 232 from entering the grey water unit 130. Thus, a hygienic barrier is formed between the grey water unit and the potable water portions of the system 100 (such as buffer tank 110 and potable water consumer 120).

A further optional feature of the controller 180 is controlling the toilet 135. For instance, if the water level sensor 181 indicates that not enough water has been collected in the grey water unit 130, the flushing of the toilet 135 may be postponed, until enough water has been collected or filled into the grey water unit 130.

In this regard, Figure 3 schematically illustrates a variant of a water supply system 100, which allows (pre-) filling the grey water unit 130. For instance, the grey water unit 130 may be pre-filled with potable water, if it does not contain enough (grey) water, such as after a drainage or if all grey water has been consumed. In this case, the water supply system 100 can comprise a bypass pipe 145 fluidly connecting the pressurised water supply 140 with the grey water unit 130 and bypassing the pressureless water buffer tank 110.

The bypass pipe 145 can be fluidly connected to a valve 142, which itself is fluidly connected to the pressurised water supply 140 and/or pressurised potable water network 220. As a mere example, valve 142 can be a three-way-valve configured to provide water from the pressurised potable water network 220 into the potable water buffer tank 110 and/or into the bypass pipe 145. Alternatively, valve 142 can be a shut-off valve solely connecting the pressurised potable water network 220 and the bypass pipe 145.

In any case, controlling valve 142 allows filling the grey water unit 130. Such filling may be necessary after the grey water unit 130 was drained or the entire grey water has been consumed or if not enough grey water is stored for the next grey water usage (such as flushing the toilet 135).

The system 100 can further comprise a separation unit 146, in order to separate the potable water system/components from the grey water system/components. This separation is necessary for hygienic reasons, in order to avoid mixing of grey water and potable water. The separation unit 146, for example an atmospheric vacuum breaker, may be installed anywhere between valve 142 and grey water unit 130, or maybe installed/integrated with valve 142.

The system 100 can further comprise a cleaning device 147 fluidly connected to the pressurised water supply 140 (e.g., via bypass pipe 145) and configured to clean at least a portion of an interior of the grey water unit 130. Due to the supply of pressurised water at the cleaning device 147, the at least a portion of the interior of the grey water unit 130 can be cleaned. For instance, the pressurised water facilitates cleaning a surface of a tank of the grey water unit 130 and/or the filter 132 by producing a stream or jet of water hitting the corresponding surface.

As a mere example, the cleaning device 147 can comprise at least one nozzle 148 (also schematically illustrated in Figure 2), which guides a stream or jet of water from the pressurised water supply 140 onto the at least a portion of the interior of the grey water unit 130. The at least one nozzle 148 allows cleaning any surface in the grey water unit 130, such as a tank or the filter 132, with the stream or jet of water.

The controller 180 may control an automatic cleaning cycle of the grey water unit 130. For example, after a flight or during draining of the entire water system 100, 220, 232, residual water in the tank 200 or network 220 can be used to clean the grey water unit 130. It is to be understood that a cleaning cycle may also be initiated in regular intervals. Likewise, a drained system, particularly a drained grey water unit 130, can be prefilled while also performing a cleaning cycle.

During the cleaning cycle, water containing particles or other objects loosened by the stream or jet of water can be flushed through drainage pipe 133, for example, into waste collecting network 232.

Although Figure 3 illustrates different pressurised water pipes or ducts between the separation unit 146 and grey water unit 130 on the one hand and cleaning device 147 on the other hand, it is to be understood that the piping/ducting may be performed in any manner.

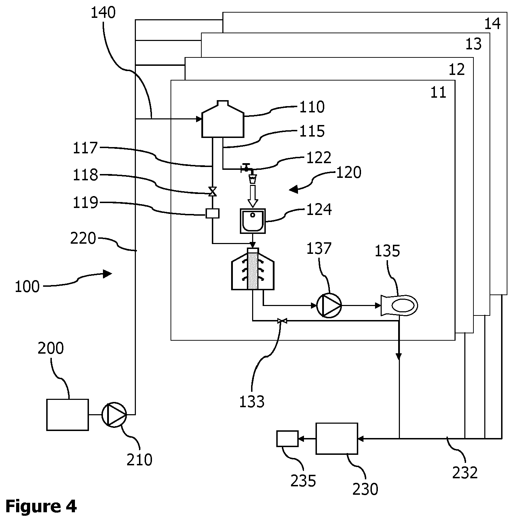

Figure 4 illustrates another variant of a water supply system 100 which, according to the invention, comprises a water fill pipe 117 configured to fluidly connect the pressureless water buffer tank 110 with the grey water unit 130. Such fluid connection allows to guide water through water fill pipe 117 from the pressureless water buffer tank 110 to the grey water unit 130. If the pressureless water buffer tank 110 is installed higher than the grey water unit 130, this supply of water can be achieved only by gravity. Thus, no additional conveying device nor pressurised water is required to (pre-) fill the grey water unit 130.

The grey water unit 130 may be (pre-) filled with potable water, in order to have sufficient grey water for associated usage. For instance, after drainage of the grey water unit 130 or if not enough grey water is stored, a fill valve 118 may be opened (e.g., controlled by controller 180 (Figure 2)). If enough water has been stored in the grey water unit 130, for example measured by sensor 181, the fill valve 118 can be closed.

The water fill pipe 117 may also include a separation unit 119, to provide a hygienic separation between the potable water system/components and the grey water system/components, like the separation unit 146. The separation unit 119, such as an atmospheric vacuum breaker, may be installed anywhere between the pressureless water buffer tank 110 and the grey water unit 130.

Another option to (pre-) fill the grey water unit 130 can be achieved by controlling the faucet 122, for example, by controller 180. The faucet 122 and sink 124 already provide a hygienic separation between the potable water system/components and the grey water system/components. Thus, in accordance with the variant illustrated in Figure 1, filling of the grey water unit 130 can be achieved via the potable water consumer 120 in an easy, lightweight and cost effective manner.

Figure 5 schematically illustrates an aircraft 1 containing at least one water supply system 100. It is to be understood that the aircraft 1 can comprise a single potable water tank 200 and/or a single waste water tank 230, while the aircraft 1 comprises a plurality of monuments 11, 12, 13, 14. The conveying device figured to convey and pressurise potable water from the potable water tank 200 to each of the plurality of water supply systems 100 in the respective monuments 11, 12, 13, 14.

In case the aircraft 1 comprise a galley 14, the galley 14 can comprise at least some components of the water supply system 100, particularly components for supplying potable water to a user, such as a potable water consumer 120. A galley 14 can be arranged adjacent to or close to another monument 11, 12, 13, which comprises a grey water unit 130 and grey water device 135, 137, so that grey water from the galley 14 can be used in another monument 11, 12, 13.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft (1), comprising:
a potable water tank (200);
a conveying device (210) configured to convey and pressurise potable water from the potable water tank (200);
a plurality of monuments (11, 12, 13); and
a water supply system (100) in each of the plurality of monuments (11, 12, 13),
wherein the water supply system comprises:
a pressureless water buffer tank (110) configured to store a predetermined amount of potable water;
a potable water consumer (120) connected to the pressureless water buffer tank (110) via a water supply pipe (115);
a grey water unit (130) configured to collect and store grey water from the water consumer (120);
a toilet (135);
a pressurisation unit (137) fluidly connected to the grey water unit (130) and configured to pressurise grey water from the grey water unit (130) and to provide pressurised grey water to the toilet (135), wherein the pressurisation unit is configured to pressurise the grey water to a pressure set in accordance with the requirements for flushing the toilet; and
a water fill pipe (117) configured to fluidly connect the pressureless water buffer tank (110) with the grey water unit (130),
wherein the pressureless water buffer tank (110) is installed in the monument (11, 12, 13) above the potable water consumer (120),
wherein the water supply pipe (115) is configured to guide water from the pressureless water buffer tank (110) to the potable water consumer (120) only by gravity,
wherein the water fill pipe (117) is configured to guide water from the pressureless water buffer tank (110) to the grey water unit (130) only by gravity, and
wherein the conveying device (210) is configured to convey and pressurise potable water from the potable water tank (200) to each of the plurality of water supply systems (100) through a network (220) of pressurised water pipes.

2. The aircraft of claim 1, wherein the grey water unit (130) comprises a filter (132) configured to filter the grey water before storing the grey water.

3. The aircraft of claim 1, wherein the water supply system further comprises:
a separation unit (119) separating potable water from grey water,
wherein the separation unit (119) is arranged in the water fill pipe (117).

4. The aircraft of one of claims 1 to 3, wherein the water supply system further comprises:
a pressurised water supply (140) fluidly connected to the conveying device (210) via the network (220) of pressurised water pipes and configured to provide pressurised potable water at least to the pressureless water buffer tank (110).

5. The aircraft of claim 4, wherein the pressurised water supply (140) is further configured to automatically fill the pressureless water buffer tank (110) to a predefined water level,
wherein, preferably, the pressurised water supply (140) comprises a controllable valve (142) fluidly connected with the pressureless water buffer tank (110).

6. The aircraft of claim 4 or 5, wherein the water supply system further comprises:
a bypass pipe (145) fluidly connecting the pressurised water supply (140) with the grey water unit (130) and bypassing the pressureless water buffer tank (110).

7. The aircraft of claim 6, wherein the water supply system further comprises:
a cleaning device (147) fluidly connected to the pressurised water supply (140) and configured to clean at least a portion of an interior of the grey water unit (130).

8. The aircraft of claim 7, wherein the cleaning device (147) comprises at least one nozzle (148) configured to spray pressurised potable water from the pressurised water supply (140) onto the at least a portion of the interior of the grey water unit (130).

9. The aircraft of one of claims 6 to 8, wherein the water supply system further comprises:
a separation unit (146) separating potable water from grey water,
wherein the separation unit (146) is arranged in the bypass pipe (145).

10. The aircraft of one of claims 1 to 9, wherein the potable water consumer (120) is a faucet (122) and a sink (124).

11. The aircraft (1) of one of claims 1 to 10, wherein each of the monuments (11, 12, 13) is an aircraft lavatory (11, 12, 13), the aircraft further comprising
a galley (14) adjacent to one of the lavatories (11, 12, 13),
wherein grey water from the galley (14) is collected in the grey water unit (130) of the aircraft lavatory (11, 12, 13) situated adjacent the galley (14).

## Patentansprüche

1. Flugzeug (1), das Folgendes umfasst:
einen Trinkwassertank (200),
eine Fördervorrichtung (210), die dazu ausgelegt ist, Trinkwasser aus dem Trinkwassertank (200) zu befördern und unter Druck zu setzen;
mehrere Monumente (11, 12, 13) und
ein Wasserversorgungssystem (100) in jedem der mehreren Monumente (11, 12, 13),
wobei das Wasserversorgungssystem Folgendes umfasst:
einen drucklosen Wasserpuffertank (110), der dazu ausgelegt ist, eine vorbestimmte Menge Trinkwasser zu speichern;
einen Trinkwasserverbraucher (120), der über ein Wasserversorgungsrohr (115) mit dem drucklosen Wasserpuffertank (110) verbunden ist;
eine Grauwassereinheit (130), die dazu ausgelegt ist, Grauwasser von dem Wasserverbraucher (120) zu sammeln und zu speichern;
eine Toilette (135);
eine Druckbeaufschlagungseinheit (137), die fluidisch mit der Grauwassereinheit (130) verbunden und dazu ausgelegt ist, Grauwasser von der Grauwassereinheit (130) unter Druck zu setzen und druckbeaufschlagtes Grauwasser der Toilette (135) zuzuführen, wobei die Druckbeaufschlagungseinheit dazu ausgelegt ist, das Grauwasser auf einen Druck unter Druck zu setzen, der gemäß den Anforderungen zum Spülen der Toilette eingestellt ist; und
ein Wassereinfüllrohr (117), das dazu ausgelegt ist, den drucklosen Wasserpuffertank (110) mit der Grauwassereinheit (130) fluidisch zu verbinden,
wobei der drucklose Wasserpuffertank (110) in dem Monument (11, 12, 13) über dem Trinkwasserverbraucher (120) installiert ist,
wobei das Wasserversorgungsrohr (115) dazu ausgelegt ist, Wasser aus dem drucklosen Wasserpuffertank (110) nur durch Schwerkraft zu dem Trinkwasserverbraucher (120) zu leiten,
wobei das Wassereinfüllrohr (117) dazu ausgelegt ist, Wasser aus dem drucklosen Wasserpuffertank (110) nur durch Schwerkraft zu der Grauwassereinheit (130) zu leiten, und
wobei die Fördervorrichtung (210) dazu ausgelegt ist, Trinkwasser aus dem Trinkwassertank (200) durch ein Netzwerk (220) aus Druckwasserrohren zu jedem der mehreren Wasserversorgungssysteme (100) zu fördern und unter Druck zu setzen.

2. Flugzeug nach Anspruch 1, wobei die Grauwassereinheit (130) einen Filter (132) umfasst, der dazu ausgelegt ist, das Grauwasser vor dem Speichern des Grauwassers zu filtern.

3. Flugzeug nach Anspruch 1, wobei das Wasserversorgungssystem ferner Folgendes umfasst:
eine Abscheidungseinheit (119), die Trinkwasser von Grauwasser abscheidet,
wobei die Abscheidungseinheit (119) in dem Wassereinfüllrohr (117) angeordnet ist.

4. Flugzeug nach einem der Ansprüche 1 bis 3, wobei das Wasserversorgungssystem ferner Folgendes umfasst:
eine Druckwasserversorgung (140), die über das Netzwerk (220) aus Druckwasserrohren fluidisch mit der Fördervorrichtung (210) verbunden und dazu ausgelegt ist, unter Druck stehendes Trinkwasser zumindest dem drucklosen Wasserpuffertank (110) zuzuführen.

5. Flugzeug nach Anspruch 4, wobei die Druckwasserversorgung (140) ferner dazu ausgelegt ist, den drucklosen Wasserpuffertank (110) automatisch auf einen vordefinierten Wasserpegel zu füllen,
wobei vorzugsweise die Druckwasserversorgung (140) ein steuerbares Ventil (142) umfasst, das fluidisch mit dem drucklosen Wasserpuffertank (110) verbunden ist.

6. Flugzeug nach Anspruch 4 oder 5, wobei das Wasserversorgungssystem ferner Folgendes umfasst:
ein Bypassrohr (145), das die Druckwasserversorgung (140) fluidisch mit der Grauwassereinheit (130) verbindet und den drucklosen Wasserpuffertank (110) umgeht.

7. Flugzeug nach Anspruch 6, wobei das Wasserversorgungssystem ferner Folgendes umfasst:
eine Reinigungsvorrichtung (147), die fluidisch mit der Druckwasserversorgung (140) verbunden und dazu ausgelegt ist, zumindest einen Abschnitt eines Innenraums der Grauwassereinheit (130) zu reinigen.

8. Flugzeug nach Anspruch 7, wobei die Reinigungsvorrichtung (147) mindestens eine Düse (148) umfasst, die dazu ausgelegt ist, unter Druck stehendes Trinkwasser von der Druckwasserversorgung (140) auf den mindestens einen Abschnitt des Innenraums der Grauwassereinheit (130) zu sprühen.

9. Flugzeug nach einem der Ansprüche 6 bis 8, wobei das Wasserversorgungssystem ferner Folgendes umfasst:
eine Abscheidungseinheit (146), die Trinkwasser von Grauwasser abscheidet,
wobei die Abscheidungseinheit (146) in dem Bypassrohr (145) angeordnet ist.

10. Flugzeug nach einem der Ansprüche 1 bis 9, wobei der Trinkwasserverbraucher (120) ein Wasserhahn (122) und ein Waschbecken (124) ist.

11. Flugzeug (1) nach einem der Ansprüche 1 bis 10, wobei jedes der Monumente (11, 12, 13) eine Flugzeugtoilette (11, 12, 13) ist, wobei das Flugzeug ferner Folgendes umfasst:
eine Bordküche (14) neben einer der Toiletten (11, 12, 13),
wobei Grauwasser aus der Bordküche (14) in der Grauwassereinheit (130) der Flugzeugtoilette (11, 12, 13) gesammelt wird, die angrenzend an die Bordküche (14) angeordnet ist.

## Revendications

1. Aéronef (1), comprenant :
un réservoir d'eau potable (200) ;
un dispositif de transport (210) conçu pour transporter et pressuriser de l'eau potable provenant du réservoir d'eau potable (200) ;
une pluralité de monuments (11, 12, 13) ; et
un système d'alimentation en eau (100) dans chacun de la pluralité de monuments (11, 12, 13),
le système d'alimentation en eau comprenant :
un réservoir tampon d'eau sans pression (110) conçu pour stocker une quantité prédéfinie d'eau potable ;
un consommateur d'eau potable (120) raccordé au réservoir tampon d'eau sans pression (110) par l'intermédiaire d'un tuyau d'alimentation en eau (115),
une unité d'eaux grises (130) conçue pour collecter et stocker les eaux grises provenant du consommateur d'eau (120) ;
des toilettes (135) ;
une unité de pressurisation (137) raccordée fluidiquement à l'unité d'eaux grises (130) et conçue pour pressuriser les eaux grises provenant de l'unité d'eaux grises (130) et pour fournir les eaux grises sous pression aux toilettes (135), l'unité de pressurisation étant conçue pour pressuriser les eaux grises à une pression réglée conformément aux exigences d'actionnement de la chasse d'eau des toilettes ; et
un tuyau de remplissage d'eau (117) conçu pour raccorder fluidiquement le réservoir tampon d'eau sans pression (110) avec l'unité d'eaux grises (130),
le réservoir tampon d'eau sans pression (110) étant installé dans le monument (11, 12, 13) au-dessus du consommateur d'eau potable (120),
le tuyau d'alimentation en eau (115) étant conçu pour guider l'eau depuis le réservoir tampon d'eau sans pression (110) vers le consommateur d'eau potable (120) uniquement par gravité,
le tuyau de remplissage d'eau (117) étant conçu pour guider l'eau du réservoir tampon d'eau sans pression (110) vers l'unité d'eaux grises (130) uniquement par gravité, et
le dispositif de transport (210) étant conçu pour transporter et pressuriser de l'eau potable du réservoir d'eau potable (200) vers chacun de la pluralité de systèmes d'alimentation en eau (100) par un réseau (220) de conduites d'eau sous pression.

2. Aéronef selon la revendication 1, l'unité d'eaux grises (130) comprenant un filtre (132) conçu pour filtrer les eaux grises avant de stocker les eaux grises.

3. Aéronef selon la revendication 1, le système d'alimentation en eau comprenant en outre :
une unité de séparation (119) séparant l'eau potable des eaux grises,
l'unité de séparation (119) étant disposée dans le tuyau de remplissage d'eau (117).

4. Aéronef selon l'une des revendications 1 à 3, le système d'alimentation en eau comprenant en outre :
une alimentation en eau sous pression (140) raccordée fluidiquement au dispositif de transport (210) par l'intermédiaire du réseau (220) de conduites d'eau sous pression et conçue pour fournir de l'eau potable sous pression au moins au réservoir tampon d'eau sans pression (110).

5. Aéronef selon la revendication 4, l'alimentation en eau sous pression (140) étant en outre conçue pour remplir automatiquement le réservoir tampon d'eau sans pression (110) jusqu'à un niveau d'eau prédéfini,
de préférence, l'alimentation en eau sous pression (140) comprenant une soupape pouvant être commandée (142) raccordée fluidiquement au réservoir tampon d'eau sans pression (110).

6. Aéronef selon la revendication 4 ou 5, le système d'alimentation en eau comprenant en outre :
un tuyau de dérivation (145) raccordant fluidiquement l'alimentation en eau sous pression (140) à l'unité d'eaux grises (130) et contournant le réservoir tampon d'eau sans pression (110).

7. Aéronef selon la revendication 6, le système d'alimentation en eau comprenant en outre :
un dispositif de nettoyage (147) raccordé fluidiquement à l'alimentation en eau sous pression (140) et conçu pour nettoyer au moins une partie de l'intérieur de l'unité d'eaux grises (130).

8. Aéronef selon la revendication 7, le dispositif de nettoyage (147) comprenant au moins une buse (148) conçue pour pulvériser de l'eau potable sous pression à partir de l'alimentation en eau sous pression (140) sur au moins une partie de l'intérieur de l'unité d'eaux grises (130).

9. Aéronef selon l'une des revendications 6 à 8, le système d'alimentation en eau comprenant en outre :
une unité de séparation (146) séparant l'eau potable des eaux grises,
l'unité de séparation (146) étant disposée dans le tuyau de dérivation (145).

10. Aéronef selon l'une des revendications 1 à 9, le consommateur d'eau potable (120) étant un robinet (122) et un évier (124).

11. Aéronef (1) selon l'une des revendications 1 à 10, chacun des monuments (11, 12, 13) étant des toilettes d'aéronef (11, 12, 13), l'aéronef comprenant en outre une cuisine (14) adjacente à l'une des toilettes (11, 12, 13),
les eaux grises provenant de la cuisine (14) étant recueillies dans l'unité d'eaux grises (130) des toilettes (11, 12, 13) de l'aéronef situées à proximité de la cuisine (14).
